# EUROPÄISCHE PATENTANMELDUNG

(11) **EP 0 739 860 A1**
(43) Veröffentlichungstag der Anmeldung: **30.10.1996**
(21) Anmeldenummer: 95106419.5
(22) Anmeldetag: 28.04.1995
(51) Int. Cl.: C02F 3/30, C02F 3/22

(54) **Verfahren und Anlage zur biologischen Reinigung von Abwasser**

(71) Anmelder: Biolog Biotechnologie und Logistik GmbH, D-04827 Gerichshain (DE)
(72) Erfinder: Heppe, Andreas, Dipl. Ing., D-04347 Leipzig (DE); Pätz, Reinhard, Dr., D-04349 Leipzig (DE)
(74) Vertreter: Künitz, Heinz, PASS Dipl.-Ing.

(57) **Zusammenfassung**

Die Erfindung hat die Aufgabe zu lösen, einen kontrollierten Medienzufluß und eine regelbare Verweilzeit in den Reaktoren zu erreichen, im Prozeß die Anreicherung gelöster Stickstoffverbindungen zu minimieren sowie die Denitrifikation durch geregelte Anreicherung mit Nitrifikanten zu verbessern und die Schaumbildung zu beherrschen.

In einem Denitrifikationsreaktor 1 wird Belebtschlamm und Abwasser gemischt, wobei eine anerobe Denitrifikation erfolgt. Durch eine Überlaufleitung 18 wird Oberflächenmedium in den Ringraum 15 des Aerobreaktors 10 geleitet. Belüftet wird der Aerobreaktor 10 über Belüftungselemente 25, wobei zusätzlich angereicherte Luft aus dem oberen Luftraum 17 des Aerobreaktors 10 gesteuert zugeführt werden kann. In den Denitrifikationsreaktor 1 wird bei Bedarf Belebtschlamm in geregelter Zusammensetzung aus dem unteren Teil des Aerobreaktors 10 zugeführt. Mischelemente 14 sorgen für die erforderliche geregelte Bewegung im Aerobreaktor 10, von dem Abwasser mit überschüssigem Belebtschlamm über die Ablaufleitung 19 in das Klärbecken 4 laufen kann. Vom Klärbecken 4 wird Klarwasser über die Ableitung 20 abgeführt und Überschußschlamm in geregelter Abwechslung entweder über die Rücklaufleitung 3 zum Aerobreaktor 10 geführt oder über die Überschußschlammleitung 5 zur Weiterverarbeitung oder Entwässerung entnommen.

Das Verfahren und die Anlage sind überall dort anwendbar und einsetzbar, wo Abwasser biologisch zu reinigen ist, wie z. B. in Stallungen.

## Beschreibung

Die Erfindung bezieht sich auf ein Verfahren und eine zugehörige Anlage Zur biologischen Reinigung von Abwasser in Reaktoren mit Schlaufenbetrieb unter Einsatz von Mischelementen Zur Medienzuführung.

Es ist gemäß der EP-Anmeldung 0 453 881 bekannt, daß ein Gemisch aus Abwasser, Biomasse und gegebenenfalls Rücklaufschlamm in wenigstens einem Strömungsleitrohr nach vorheriger Entgasung zusammen mit dem sauerstoffhaltigen Gas in dessen unterem Bereich zugeführt werden. Dabei wird ein Teilstrom des zu behandelnden Abwassers dem in den Ringraum aufsteigenden Abwasserstrom zugeleitet. Ein Teil des behandelten Gemisches wird ständig und auschließlich über einen Überlauf in ein Misch- und Entgasungsgefäß übertreten. In dieses Misch- und Entgasungsgefäß wird auch das zu behandelnde schadstoffhaltige Wasser eingeleitet und aus ihm wird das Gemisch entnommen. Das bei dem Prozeß entstehende Abgas und auch das zu behandelnde Gemisch wird aus dem Misch- und Entgasungsgefäß abgezogen.

Zur Durchführung des Verfahrens wird ein senkrecht stehender Schlaufenreaktor eingesetzt. In diesem ist ein oben und unten offenes Strömungsleitrohr angeordnet, das von einem zylindrischen Mantel umgeben wird, so daß zwischen Strömungsleitrohr und Mantel ein Ringraum entsteht. In dem Strömungsleitrohr befindet sich im unteren Abschnitt eine Zweistoffdüse, deren nach unten gerichteter Austritt die Zufuhr des zu behandelnden Abwassers sowie eines sauerstoffhaltigen Gases ermöglicht. Oberhalb des Strömungsleitrohres ist in dem umgebenden Mantel ein Überlauf angeordnet, durch den das behandelte Abwasser abgezogen und in ein Misch- und Entgasungsgefäß geleitet werden kann. In den unteren Abschnitt dieses Gefäßes wird über einen Einlauf das zu behandelnde Abwasser eingeleitet. Aus dessen konisch zulaufendem Boden wird das zu behandelnde Abwasser zusammen mit entgaster Biomasse über eine Pumpe aus dem Misch- und Entgasungsgefäß herausgesaugt und der Abwasserzuführleitung eingespeist. Von der Abwasserzuführleitung zur Zweistoffdüse geht eine Teilstromabzweigleitung ab, von der Abwasser zu den in dem Ringraum angeordneten Einstoffdüsen geleitet wird.

Hierbei ist besonders nachteilig, daß kein Einfluß auf den Gehalt des Mediums an Schadstoffen erfolgen kann, das unkontrolliert zufließt und daß die Verweilzeit des Mediums nur im Gesamtsystem veränderbar ist.

Weiterhin ist es nachteilig, daß durch die Zuführung des Gemisches aus dem Misch- und Entgasungsgefäß im Reaktor eine Zuführung von gelösten Stickstoffverbindungen mit erfolgt, die in hohen Konzentrationen den biologischen Abbau der Abwasserinhaltsstoffe hemmen.

Ein weiterer Nachteil besteht darin, daß zur Minderung des im Prozeß entstehenden Schaumes zusätzliche Aggregate vorzusehen sind.

Nachteilig ist auch die Zuführung von Rücklaufschlamm in den ersten Reaktor, weil damit in diesem eine Anreicherung mit Nitrifikanten behindert wird.

Der im Patentanspruch 1 angegebenen Erfindung liegt das Problem zugrunde, einen kontrollierten Medienzufluß und eine in gewissem Maße regelbare Verweilzeit des Mediums in den einzelnen Reaktoren zu erreichen, im Reaktorprozeß die Anreicherung gelöster Stickstoffverbindungen, insbesondere Ammonium- und Nitratstickstoff zu minimieren und die Denitrifikation im ersten Reaktor durch die Anreicherung mit Nitrifikanten zu verbessern sowie den im Prozeß anfallenden Schaum ohne zusätzlich darauf gerichtet vorgesehene Aggregate zu beherrschen.

Erfindungsgemäß läuft das Verfahren wie im folgenden beschrieben ab:
- in einen Denitrifikationsreaktor wird unbehandeltes Abwasser sowie Belebtschlamm steuerbar zugeführt;
- der Denitrifikationsreaktor ist vor einem Aerobreaktor stationiert und mit einer Entgasungsleitung versehen;
- durch einen Überlauf von vorzugsweise Oberflächenmedium aus dem Denitrifikationsreaktor in den Aerobreaktor wird dessen Betrieb gewährleistet;
- aus dem Aerobreaktor wird Belebtschlamm bevorzugt in den unteren Bereich des Denitrifikationsreaktor gepumpt;
- aus dem Klärbecken wird bei Bedarf Rücklaufschlamm dem Aerobreaktor zugeführt;
- über Belüftungselemente wird dem Aerobreaktor Frischluft zugeführt, wobei bei Bedarf auch angereicherte Luft aus dem oberen Bereich des Aerobreaktors zuführbar ist;
- in den Ringraum des Aerobreaktors mündet mindestens eine Luftleitung mit der mindestens ein Mischelement verbunden ist;
- überschüssiger Belebtschlamm wird aus dem Aerobreaktor dem Klärbecken zugeführt;
- der Überschußschlamm wird aus dem Klärbecken zur weiteren Behandlung abgeführt oder als Rücklaufschlamm bei Bedarf zum Aerobreaktor geleitet;
- der in den unteren Bereich des Denitrifikationsreaktors zu pumpende Belebtschlamm wird durch eine Reaktorpumpe bevorzugt aus dem unteren Bereich des Aerobreaktors in regelbarer Zusammensetzung entnommen;
- der Überlauf vom Denitrifikationsreaktor zum Aerobreaktor erfolgt regelbar;
- der aus dem Klärbecken bedarfsweise zum Aerobreaktor geführte Rücklaufschlamm bestreut über ein Leitblech breitflächig die Medienoberfläche.

In der zugehörigen Anlage zur Durchführung des Verfahrens wird in dem dem Aerobreaktor vorgelagerten Denitrifikationsreaktor das Medium aus bevorzugt zyklisch geregelt zugeführtem Abwasser und Belebtschlamm gemischt. Der Belebtschlamm wird aus dem unteren Teil des im Aerobreaktor befindlichen Steigrohres durch eine regelbare Reaktorpumpe in ebenfalls einstellbarem Belebtschlammverhältnis abgesaugt und über eine Reaktorleitung in den unteren Bereich des Denitrifikationsreaktors gespritzt. Im Denitrifikationsreaktor ist ein Strömungsleiter befestigt, durch den die Mischung des Reaktorinhaltes verbessert wird. Im Bereich der Oberfläche des Denitrifikationsreaktors ist eine relativ groß dimensionierte Überlaufleitung angeordnet, über die Medium in den Ringraum des Aerobreaktors fließen kann. Anfallende Gase werden durch Entgasungsleitungen aus den Reaktoren abgeleitet. Aus dem Aerobreaktor wird über eine Ablaufleitung Abwasser mit Belebtschlamm in das Klärbecken geleitet. Von dort wird Klarwasser über die Ableitung abgeführt. Im Klärbecken angesammelter Überschußschlamm wird periodisch durch ein Ventil zur Weiterbearbeitung als Rücklaufschlamm entnommen oder durch ein zweites Ventil geregelt der Entwässerung zugeführt. Im unteren Teil des Aerobreaktors mündet eine Reaktorleitung, durch die Medium aus dem Aerobreaktormittels einer Reaktorpumpe in den unteren Teil des Denitrifikationsreaktors bei Bedarf gepumpt werden kann.

Im unteren Teil des Aerobreaktors mündet mindestens eine Luftleitung, an die jeweils ein Mischelement angeschlossen ist, dessen Wirkungsweise vorteilhafterweise tangential nach oben gerichtet vorgesehen wird. Bei mehreren eingesetzten Mischelementen sollten sie seitenversetzt und bei Bedarf auch höhenversetzt angeordnet werden. Im unteren Bereich des Aerobreaktors sind Belüftungselemente vorgesehen, die für Frischluftzufuhr sorgen und im Bedarfsfall auch mit angereicherter Luft aus dem oberen Luftraum des Aerobreaktors versorgen können. Als Mischelemente werden Rührwerke eingesetzt, die bei kleinen Anlagen durch Zweistoffdüsen ersetzt werden können.

Die erfindungsgemäße Anlage ermöglicht verschiedene Vorteile.

Die Regelung zwischen Denitrifikationsreaktor und Aerobreaktor schafft die Voraussetzung, daß die Anlage auf unterschiedlich belastete Frachten in den Abwässern eingestellt werden kann.

In der Anlage können nicht nur hochbelastete Abwässer behandelt werden, sondern auch Faulwässer aus anderen biologischen Anlagen, insbesondere jedoch stickstoffhaltige Abwässer.

Die aus den Entgasungsleitungen entweichenden Abgase sind weder geruchsbelästigend noch gesundheitsschädlich. Es besteht also keine Emmissionsgefährdung.

Durch die Zuführung von Überschußschlamm ist die Anlage in kürzester Zeit anfahrbar.

Die große Verwirbelung im Aerobreaktor sichert eine gute Sauerstoffausbeute bei gleichzeitiger Schaffung neuer Oberflächen von Mikrobenverbänden. Dies ermöglichen die großen Scherkräfte im turbulenten Reaktorbereich durch das Pumpen und Mischen.

Im Steigrohr, in dem ja Medium Von oben nach unten "fließt'', entsteht im mittleren Bereich des Steigrohres ein Stillstand der Sauerstoffblasen, die dadurch intensiver von den Mikroben verzehrt werden können.

Durch die zusätzliche Ansaugung von Luft aus dem oberen Luftraum des Aerobreaktors wird eine zusätzliche Kohlenstoffquelle erschlossen. Dadurch können hoch stickstoffhaltige Abwässer, ohne von außen zusätzlich Kohlenstoff zuführen zu müssen, verarbeitet werden.

Durch den breitflächig über ein Leitblech dem Aerobreaktor zugeführten Rücklaufschlamm wird eine zusätzliche Schaumdämmung erreicht.

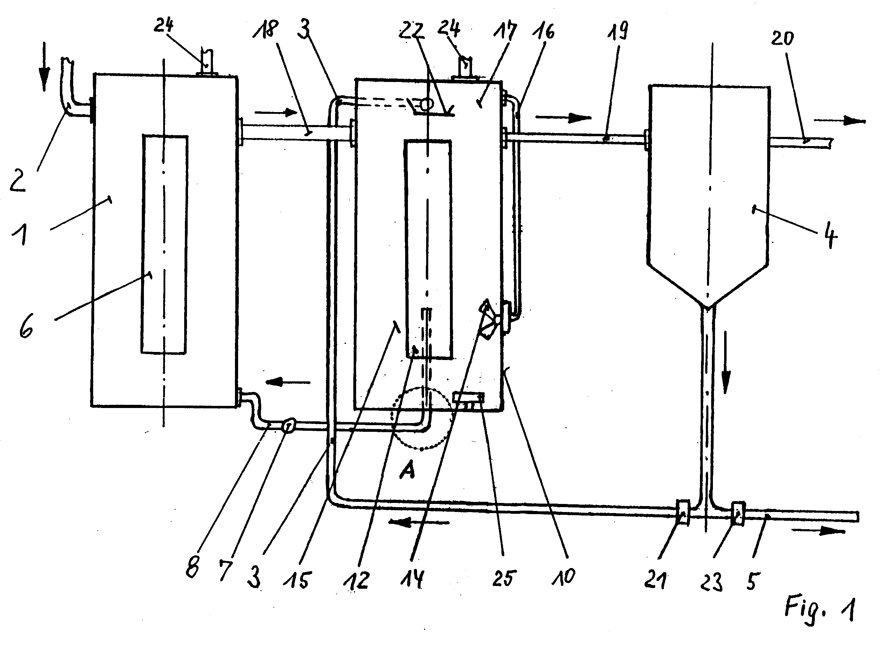

Im folgenden wird die Erfindung anhand eines Beispieles und mit Bezug auf die beiliegende Zeichnung näher erläutert, wobei die
- Figur 1: die schematische Vorderansicht der Anlage zeigt und die

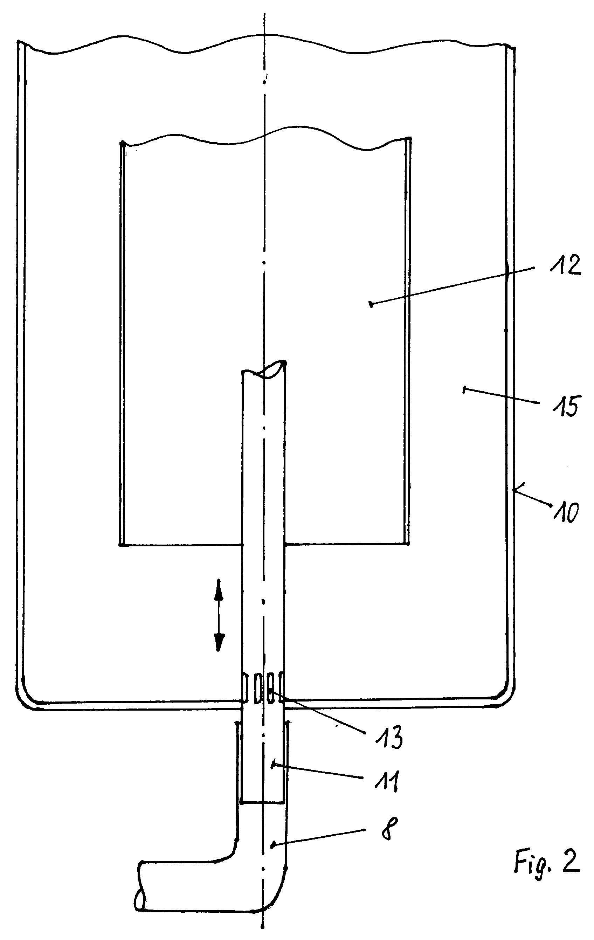

- Figur 2: ein Detail A aus Fig. 1 verdeutlicht.

Das erfindungsgemäße Verfahren läuft so ab, daß ein Medium aus Abwasser und Belebtschlamm im Denitrifikationsreaktor 1 gemischt wird. Dabei erfolgt eine anaerobe Denitrifikation und durch eine Überlaufleitung 18 wird aus dem Denitrifikationsreaktor 1 Oberflächenmedium in den Ringraum 15 des Aerobreaktors 10 geleitet. Die im Denitrifikationsreaktor 1 anfallenden Abgase entweichen über die Entgasungsleitung 24 aus dem Reaktor. Die Belüftung des Aerobreaktors 10 erfolgt über am Boden angebrachte Belüftungselemente 25. Eine zusätzliche Belüftung erfolgt bedarfsweise in den Ringraum 15 des Aerobreaktors 10 durch nicht besonders dargestellte Belüftungsaggregate aus dem oberen Luftraum des Aerobreaktors 10. Als Belebtschlammzusatz zum Abwasser wird von einer Reaktorpumpe 7 durch die Reaktorleitung 8 ein Teil des zu behandelnden Mediums als Belebtschlamm in regelbarer Zusammensetzung vom Aerobreaktor 10 in den unteren Teil des Denitrifikationsreaktors 1 gepumpt.

In der zugehörigen Anlage wird das Medium aus Abwasser und Belebtschlamm im Denitrifikationsreaktor 1 gemischt. Das Abwasser wird über die Zuflußleitung 2 bevorzugt zyklisch geregelt zugeführt. Die Belebtschlammzufuhr erfolgt aus dem unteren Teil des im Aerobreaktor 10 befindlichen Steigrohres 12 über die Reaktorleitung 8 durch die Reaktorpumpe 7 in den unteren Bereich des Dentrifikationsreaktors 1. Um den Belebtschlammzusatz in der der jeweiligen Situation entsprechenden erforderlichen Zusammensetzung über die Reaktorleitung 8 dem Denitrifikationsreaktor 1 gesteuert zuführen zu können, mündet in die Reaktorleitung 8 ein geregelt vertikal verschiebbares Entnahmerohr 11, das im unteren Teil mit Schlitzen 13 versehen ist, und dessen oberes Ende sich im Steigrohr 12 befindet. Ein Strömungsleiter 6 unterstützt im Denitrifikationsreaktor 1 die Mischung des Reaktorinhaltes. Dieses Gemisch wird von der Oberfläche des Denitrifikationsreaktors 1 über die relativ groß dimensionierte Überlaufleitung 18 in den Ringraum 15 des Aerobreaktors 10 geleitet. Anfallende Gase werden über die Entgasungsleitung 24 abgeleitet. Die kleiner dimensionierte Ablaufleitung 19 leitet nach Abwasserzufluß Abwasser mit überschüssigem Belebtschlamm aus dem Aerobreaktor 10 in das Klärbecken 4.

Aus dem Klärbecken 4 wird das Klarwasser über die Ableitung 20 abgeführt und über die Überschußschlammleitung 5 wird der Überschußschlamm periodisch regelbar durch ein Ventil 23 zur Weiterverarbeitung oder Entwässerung entnommen. Ein Teil davon wird über die Rücklaufleitung 3 abgezweigt und durch das Ventil 21 geregelt dem Aerobreaktor 10 als Rücklaufschlamm wieder zugeführt. Der Zufluß des Rücklaufschlammes erfolgt oberhalb des Mediumspiegels über ein Leitblech 22 in breitflächigem Auswurf, wobei durch entsprechende Gestaltung des Leitbleches 22 der Rücklaufschlamm weitgehend von der Überlaufleitung 18 ferngehalten und gleichzeitig eine Schaumbildung minimiert wird.

Mit dem oberen Luftraum 17 des Aerobreaktors 10 ist eine Luftleitung 16 verbunden, die im unteren Bereich des Ringraumes 15 im Aerobreaktor 10 mündet und über die in bekannter Weise eine Luftzufuhr erfolgt. Überschüssige Abgase entweichen durch eine Entgasungsleitung 24. Im Ringraum 15 des Aerobreaktors 10 ist im unteren Bereich mindestens ein Mischelement 14 vorgesehen, das vorteilhafterweise als Rührwerk 14 ausgebildet und über die Luftleitung 16 erforderliche zusätzliche Luftzufuhr mit übernehmen kann. Dieses Rührwerk 14 ist in vorteilhafter Weise tangential nach oben gerichtet angeordnet. Wirkungsvoller ist die Anordnung mehrerer Rührwerke 14, die in gleicher Höhe aber seitenversetzt und erforderlichenfalls höhenversetzt eingebaut sind. Im unteren Bereich des Aerobreaktors 10 sind Belüftungselemente 25 angeordnet. Bei Bedarf können die Belüftungselemente 25 zusätzlich mit Luft aus dem oberen Luftraum 17 des Aerobreaktors 10 beschickt werden. Dies beeinflußt durch den Gasgehalt der Luft vorteilhafterweise den Zustand des Reaktorinhaltes.

Bei kleinen Anlagen ist es vorteilhaft, wenn statt des Rührwerkes 14 nur Zweistoffdüsen 14 eingesetzt werden. Diese können mit einer zusätzlichen Leitung aus dem Steigrohr 12 entnommenes Medium mit in den Ringraum 15 einspritzen.

### Bezugszeichen

- 1: Denitrifikationsreaktor
- 2: Zuflußleitung
- 3: Rücklaufleitung
- 4: Klärbecken
- 5: Überschußschlammleitung
- 6: Strömungsleiter
- 7: Reaktorpumpe
- 8: Reaktorleitung
- 10: Aerobreaktor
- 11: Entnahmerohr
- 12: Steigrohr
- 13: Schlitze
- 14: Mischelemente
- 15: Ringraum
- 16: Luftleitung
- 17: obere Luftraum des Aerobreaktors
- 18: Überlaufleitung
- 19: Ablaufleitung
- 20: Ableitung
- 21: Ventil
- 22: Leitblech
- 23: Ventil
- 24: Entgasungsleitung
- 25: Belüftungselement

## Patentansprüche

1. Verfahren zur biologischen Reinigung von Abwasser in Reaktoren mit Schlaufenbetrieb, **dadurch gekennzeichnet**, daß
- der Zulauf von unbehandeltem Abwasser und Belebtschlamm zu einem einem Aerobreaktor (10) vorgelagerten und mit einer Entgasungsleitung (24) versehenen Denitrifikationsreaktor (1) erfolgt;
- während des Betriebes der Anlage in den Aerobreaktor (10) ein Überlauf von Oberflächenmedium aus dem Denitrifikationsreaktor (1) erfolgt;
- aus dem Aerobreaktor (10) Belebtschlamm abgesaugt und in einstellbarer Zusammensetzung dem Denitrifikationsreaktor (1) zugeführt wird;
- Rücklaufschlamm vom Klärbecken (4) über ein Ventil (21) zum Aerobreaktor (10) geleitet wird;
- im Aerobreaktor (10) Belüftungselemente (25) angeordnet sind und aus dem oberen Bereich (17) des Aerobreaktors (10) im Bedarfsfall über die Luftleitung (16) eine zusätzliche Belüftung möglich wird;
- weiterhin eine Überlaufleitung (18) vom Denitrifikationsreaktor (1) zum Aerobreaktor (10) vorgesehen ist;
- vom Aerobreaktor (10) überschüssiger Belebtschlamm über die Ablaufleitung (19) dem Klärbecken (4) zugeführt wird;
- aus dem Klärbecken (4) Klarwasser zum Ablauf oder zur zweiten Behandlungsstufe geleitet und Überschußschlamm zur weiteren Behandlung abgeführt wird.

2. Verfahren nach Anspruch 1, **dadurch gekennzeichnet**, daß die Absaugung von Medium aus dem unteren Teil des Aerobreaktors (10) durch eine Reaktorpumpe (7) erfolgt und über eine Reaktorleitung (8) dem Denitrifikationsreaktor (1) zugeführt wird.

3. Verfahren nach Anspruch 1, **dadurch gekennzeichnet**, daß der Überlauf von Denitrifikationsreaktor (1) zum Aerobreaktor (10) regelbar ausgebildet ist.

4. Verfahren nach Anspruch 1, **dadurch gekennzeichnet**, daß der vom Klärbecken (4) zum Aerobreaktor(10) geleitete Rücklaufschlamm über ein Leitblech (22) breitflächig die Medienoberfläche bestreut.

5. Anlage zur Durchführung des Verfahrens nach Anspruch 1 bis 4, die aus senkrecht stehenden Schlaufenreaktoren besteht, die jeweils durch einen einen Ringraum umschließenden Mantel gebildet werden, wobei mittig in dem Ringraum des Aerobreaktors ein Steigrohr angeordnet ist und Belüftungselemente vorgesehen sind, und jeder Reaktor mit einer Überlaufleitung verbunden ist, **dadurch gekennzeichnet**, daß der erste Reaktor als Denitrifikationsreaktor (1) ausgebildet ist, in den über eine Zuflußleitung (2) Abwasser zugeführt wird und aus dem die Abgase über eine Entgasungsleitung (24) ausgeleitet werden, und an den eine zum zweiten Reaktor, der als Aerobreaktor (10) vorgesehen ist, gehende Überlaufleitung (18) angeschlossen ist und in dem im unteren Teil des Ringraumes (15) eine Reaktorleitung (8) mündet, über die Belebtschlamm vom Aerobreaktor (10) zum Denitrifikationsreaktor (1) geleitet wird, und im unteren Teil des Aerobreaktors (10) mindestens ein Mischelement (14), vorzugsweise aber mehrere Mischelemente (14) vorteilhafterweise tangential nach oben gerichtet seitenversetzt und erforderlichenfalls höhenversetzt vorgesehen sind und im unteren Bereich des Aerobreaktors (10) Belüftungselemente (25) angeordnet sind und der Aerobreaktor (10) über die Rücklaufleitung (3) den Bedürfnissen entsprechend, und durch das Ventil (21) geregelt, aus dem durch eine Ablaufleitung (19) mit dem Aerobreaktor (10) verbundenen Klärbecken (4) Rücklaufschlamm zugeführt bekommt.

6. Anlage nach Anspruchnspruch 5, **dadurch gekennzeichnet**, daß die Mischelemente (14) als luftansaugende Rührwerke vorgesehen werden und über die Luftleitung (16) bei Bedarf Luft aus dem oberen Luftraum (17) des Aerobreaktors (10) ansaugen und in den Ringraum (15) des Aerobreaktors (10) mit einführen.

7. Anlage nach Anspruch 5, **dadurch gekennzeichnet,** daß im Bedarfsfall zusätzlich über eine Luftleitung aus dem oberen Luftraum (17) des Aerobreaktors (10) Luft zu dem Belüftungselement (25) geleitet wird.

8. Anlage nach Anspruch 5, **dadurch gekennzeichnet**, daß bei kleinen Anlagen als Mischelemente (14) nur Zweistoffdüsen vorgesehen werden.

9. Anlage nach Anspruch 5, **dadurch gekennzeichnet,** daß im Denitrifikationsreaktor (1) mindestens ein Strömungsleiter (6) angeordnet ist.

10. Anlage nach Anspruch 5, **dadurch gekennzeichnet**, daß im Aerobreaktor (10) ein regelbar vertikal verschiebbares Entnahmerohr (11) im unteren Teil mit Schlitzen (13) versehen ist und in der Reaktorleitung (8) geführt ist.
